# EUROPEAN PATENT APPLICATION

(11) **EP 4 614 334 A1**
(43) Date of publication of application: **10.09.2025**
(21) Application number: 25184159.9
(22) Date of filing: 20.06.2025
(51) Int. Cl.: G06F 12/109, G06N 3/08, G06N 3/084, G06N 3/045, G06N 3/063, G06F 16/182, G06F 16/188

(54) **MIXTURE-OF-EXPERTS MODEL BASED COLLECTIVE COMMUNICATION METHOD, SYSTEM AND DEVICE**

(30) Priority: 20.03.2025 CN 202510338849
(71) Applicant: Beijing Baidu Netcom Science Technology Co., Ltd., Beijing 100085 (CN)
(72) Inventor: CAO, Ying, Beijing, 100085 (CN); GONG, Xiaozhang, Beijing, 100085 (CN); LI, Zhaogeng, Beijing, 100085 (CN)
(74) Representative: Lucke, Andreas

(57) **Abstract**

The present disclosure provides a Mixture-of-Experts model based collective communication method, system and device, and relates to the field of communication technology, and specifically to the fields of technologies such as chip processors, computing power clusters, collective communication operations and large models. The collective communication method is applied to a communication receiving end, and includes: receiving a data write-in instruction, where the data write-in instruction includes to-be-processed data and first address information; accessing a virtual expert address in a pre-created virtual address space according to the first address information; applying for a corresponding actual physical space for the virtual expert address based on a size of the to-be-processed data; and writing the to-be-processed data into the actual physical space. According to the collective communication method provided in the present disclosure, the collective communication can be realized without synchronizing memory information.

## Description

### TECHNICAL FIELD

The present disclosure relates to the field of communication technology, specifically to the fields of technologies such as chip processors, computing power clusters, collective communication operations and large models, and particularly to a Mixture-of-Experts model based collective communication method, system and apparatus, an electronic device, a computer readable storage medium and a computer program product.

### BACKGROUND

In large-scale distributed training, a Mixture-of-Experts (MoE) model is a model architecture, which processes different tasks through many "expert" networks. In a scenario of the MoE, many-to-many variable counting communication (alltoallv) needs to be performed among a plurality of processors participating in the training.

### SUMMARY

Embodiments of the present disclosure provide a Mixture-of-Experts model based collective communication method and system, an electronic device, a computer readable storage medium and a computer program product.

In a first aspect, an embodiment of the present disclosure provides a Mixture-of-Experts model based collective communication method, including: receiving a data write-in instruction, where the data write-in instruction includes to-be-processed data and first address information; accessing a virtual expert address in a pre-created virtual address space according to the first address information; applying for a corresponding actual physical space for the virtual expert address based on a size of the to-be-processed data; and writing the to-be-processed data into the actual physical space.

In a second aspect, an embodiment of the present disclosure provides a Mixture-of-Experts model based collective communication system, including a plurality of processors and a switch. The switch is configured to: receive an instruction, the instruction including to-be-processed data, address information and data routing information; and multicast the instruction to a corresponding processor based on the data routing information. The processor is configured to: access a virtual expert address in a pre-created virtual address space according to the address information, in response to the received instruction being a data write-in instruction; apply for a corresponding actual physical space for the virtual expert address based on a size of the to-be-processed data; and write the to-be-processed data into the actual physical space.

In a third aspect, an embodiment of the present disclosure provides a Mixture-of-Experts model based collective communication apparatus, including a receiving unit, configured to receive a data write-in instruction, where the data write-in instruction includes to-be-processed data and first address information; an accessing unit, configured to access a virtual expert address in a pre-created virtual address space according to the first address information; an applying unit, configured to apply for a corresponding actual physical space for the virtual expert address based on a size of the to-be-processed data; and a writing unit, configured to write the to-be-processed data into the actual physical space.

In a fourth aspect, an embodiment of the present disclosure provides an electronic device, including at least one processor; and a memory, in communication with the at least one processor. The memory stores instructions executable by the at least one processor, and the instructions are executed by the at least one processor, to enable the at least one processor to perform the collective communication method according to any implementation in the first aspect.

In a fifth aspect, an embodiment of the present disclosure provides a non-transitory computer readable storage medium, storing a computer instruction. The computer instruction is used to cause a computer to perform the collective communication method according to any implementation in the first aspect.

In a sixth aspect, an embodiment of the present disclosure provides a computer program product, including a computer program. The computer program, when executed by a processor, implements steps of the collective communication method according to any implementation in the first aspect.

### BRIEF DESCRIPTION OF THE DRAWINGS

Through detailed descriptions of non-limiting embodiments given with reference to the following accompanying drawings, other features, objectives and advantages of the present disclosure will be more apparent:
Fig. 1 illustrates an exemplary system architecture in which embodiments of a collective communication method and system, an electronic device and a computer readable storage medium according to the present disclosure may be applied;
Fig. 2 is a flowchart of a Mixture-of-Experts model based collective communication method provided by an embodiment of the present disclosure;
Fig. 3 is a schematic diagram of a virtual numbered address space and a virtual expert address space in a Mixture-of-Experts model based collective communication provided by an embodiment of the present disclosure;
Fig. 4 is a flowchart of another Mixture-of-Experts model based collective communication method provided by an embodiment of the present disclosure;
Fig. 5 is a schematic diagram of data multicasting at a Dispatch stage provided by an embodiment of the present disclosure;
Fig. 6 is a schematic diagram of first routing information carried in a data write-in instruction related to Fig. 5;
Fig. 7 is a schematic diagram of a data reduction at a Combine stage provided by an embodiment of the present disclosure;
Fig. 8 is a schematic diagram of second routing information carried by a data read instruction related to Fig. 7;
Fig. 9 is a schematic diagram of a Mixture-of-Experts model based collective communication system provided by the present disclosure;
Fig. 10 is a structural diagram of a physical memory allocation apparatus provided by an embodiment of the present disclosure;
Fig. 11 is a structural diagram of another physical memory allocation apparatus provided by an embodiment of the present disclosure;
Fig. 12 is a structure block diagram of a Mixture-of-Experts model based collective communication apparatus provided by the present disclosure; and
Fig. 13 is a schematic block diagram of an electronic device provided by an embodiment of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description. It should be noted that the embodiments in the present disclosure and the features in the embodiments may be combined with each other on a non-conflict basis.

In the technical solution of the present disclosure, the acquisition, storage, use, processing, transmission, provision, disclosure, etc. of the personal information of a user all comply with the provisions of the relevant laws and regulations, and do not violate public order and good customs.

An embodiment of the present disclosure provides an alltoallv communication process in an MoE scenario. For example, 4 GPUs communicate1 with each other, and Rank is the logical number of a GPU to be used to identify a different GPU, for example, Ranko is used to identify the GPU numbered 0, Rank1 is used to identify the GPU numbered 1, and so on. An example in which only one expert model exists in each Rank, and a communication initiating end communicates with two communication receiving ends at a time is given for illustration. The alltoallv process of MoE is divided into two stages (a Dispatch stage and a Combine stage).

Specifically, at the Dispatch stage, input data (Token) is first calculated and obtained based on an attention calculation, an addition operation and an normalization operation. Here, the core of the attention calculation is to calculate the attention weight of the input data. Common attention mechanisms include dot-product attention and multi-head attention. The addition operation is used to sum the output and input data of an attention layer. The normalization operation is used to normalize the result of the addition operation.

Then, the Token is used as an input, and the Token data is sent to a corresponding expert model according to the route map outputted by a gating network. Moreover, a feedforward neural network calculation is completed by different expert models. Here, the route map is used to mark the identifier of the target expert model to which the data is sent, and the route map may be specifically expressed in the form of a list, where the row of the list refers to the identifier of the expert model and the column of the list refers to the identifier of the Token. From the perspective of Ranko, the Ranko needs to send the Token to the expert models on other Ranks. For all Rank nodes, the Token needs to be sent to the other Ranks according to the route map

At the Combine stage, the Combine process is actually a reverse process of the Dispatch process. After all the expert models complete the feedforward neural network calculation, it is required to return the Token to the original Rank and complete the weight calculation of all Tokens based on the preset weight values of the Tokens. From the perspective of Ranko, the Ranko needs to collect, from the expert models on other Ranks, all the Tokens of which the calculation is completed, and complete the calculation of the Token weights based on the weight values.

In the alltoallv data transmission procedure in the above MoE process, for the process of sending data, a specific location at which the data needs to be placed at a remote end needs to be sensed, and therefore, it is inevitable that some memory information needs to be synchronized, and this process is very time-consuming in an inference or training process. Meanwhile, the end sending the data needs to inform a receiving end of how much memory is needed, and then the receiving end needs to allocate a memory space and synchronize memory information to the sending end. Then, the sending end sends the data to the remote end based on the remote-end memory address information.

On this basis, the present disclosure further provides a Mixture-of-Experts model based collective communication method and system, an electronic device, a computer readable storage medium and a computer program product that do not need to synchronize address information.

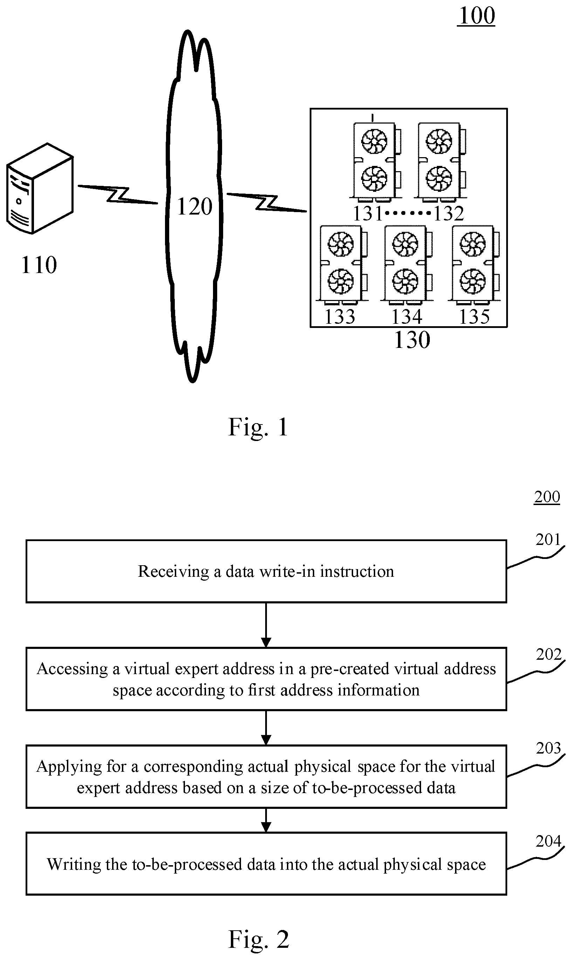

Fig. 1 illustrates an exemplary system architecture 100 in which embodiments of a collective communication method and system, an electronic device and a computer readable storage medium according to the present disclosure may be applied.

As shown in Fig. 1, the system architecture 100 may include a server 110, a network 120, and a computing power cluster 130. Here, the computing power cluster 130 includes a plurality of graphics processing units, for example, 131, 132, 133, 134 and 135 (which does not mean there are only five graphics processing units, but only means that a few number of graphics processing units are adopted as an example in Fig. 1) existing in the form of a video card, the video cards 131, 132, 133, 134 and 135 include a plurality of graphics processing chips (i.e., GPUs), and the plurality of graphics processing chips can communicate with each other in an MOE scenario. The network 120 serves as a medium providing a communication link between the server 110 and the computing power cluster 130. The network 120 may include various types of connections, for example, wired or wireless communication links, or optical fiber cables.

A user may use a terminal device to interact with the server 110 via the network 120, to receive or send messages, etc. On the server 110, the network 120 and the terminal device, various applications for implementing the information communication therebetween may be installed, to realize the communication between a plurality of image processing chips.

The terminal device and the server 110 may be hardware or software. When being the hardware, the terminal device may be various electronic devices having a display screen, the electronic devices including, but not limited to, a smartphone, a tablet computer, a laptop portable computer, a desktop computer, and the like. When being the software, the terminal device may be installed in the above electronic devices. The terminal device may be implemented as a plurality of pieces of software or a plurality of software modules, or may be implemented as a single piece of software or a single software module, which will not be specifically limited here. When being the hardware, the server 110 may be implemented as a distributed server cluster composed of a plurality of servers, or may be implemented as a single server. When being the software, the server 110 may be implemented as a plurality of pieces of software or a plurality of software modules, or may be implemented as a single piece of software or a single software module, which will not be specifically limited here. The graphics processing unit constituting the computing power cluster 130 is typically embodied as hardware, and clearly, may alternatively be embodied as software or a product of running of software in a special scenario (e.g., a simulation scenario), which is not specifically limited here.

The server 110 may provide various kinds of services through a variety of built-in applications, for example, send a communication instruction to enable the plurality of GPUs in the computing power cluster 130 to communicate with each other.

Further, the plurality of GPUs in the computing power cluster 130 may give a feedback to the server 110 after completing the communication.

It should be appreciated that the numbers of the servers, the networks, the computing power clusters and the video cards in Fig. 1 are merely illustrative. Any number of servers, networks, computing power clusters and video cards may be provided based on actual requirements.

Referring to Fig. 2, Fig. 2 is a flowchart of a Mixture-of-Experts model based collective communication method provided by an embodiment of the present disclosure, the method being applied to a communication receiving end. Here, the flow 200 includes the following steps.

Step 201, receiving a data write-in instruction.

Here, in a collective communication, the executing bodies communicating with each other may each initiate a communication request as a communication sending side, and may each perform communication processing as a communication receiving side according to the received communication request. This step is intended to be processed by an executing body of the Mixture-of-Experts model based collective communication method as a communication receiving end. Here, the executing body may refer to one or more GPUs in the computing power cluster 130 shown in Fig. 2, or may refer to another electronic device capable of receiving and processing data, which is not limited in the present disclosure.

Specifically, when a communication requesting side needs to communicate with another executing body, the communication requesting side invokes a communication instruction and sends the communication instruction to the communication receiving side. Here, the communication instruction may be a data write-in instruction or a data read instruction, or may be another communication instruction, which is not limited in the present disclosure.

Here, the instruction form of the data write-in instruction may be inc_v.store, and the instruction form of the data read instruction may be inc_v.load_reduce.

In inc_v.store(input_buffer, inc_group_buffer_va, length, rank_info, expert_info), input_buffer denotes a source address of to-be-processed data, inc_group_buffer_va denotes a target address of the to-be-processed data, length denotes a length of the to-be-processed data, rank_info denotes rankID participating in an inc_v store operation within inc group; and expert_info denotes the ExpertID that the input data token needs to reach. That is, inc_v.store(input_buffer, inc_group_buffer_va, length, rank_info, expert_info) denotes that data of a size (length) is read from a local input buffer, and the data is written to the VA corresponding to INC group based on ank_info and expert_info.

In inc_v. load_reduce(inc_group_buffer_va, output_buffer, length, rank_info, expert_info, weight_info), inc_group_buffer_va denotes a source address of the to-be-processed data, output_buffer denotes a target address of the to-be-processed data, length denotes a length of the to-be-processed data, and weight_info denotes weight information corresponding to token at expert. That is, inc_v. load_reduce(inc_group_buffer_va, output_buffer, length) denotes that data of a size (length) is read from the VA corresponding to INC group, and the data is written to a local ouput buffer based on rank_info, expert_info and weight_info.

It should be noted that rank_info and expert_info are only forms of expression, and may be replaced by other expressions such as bitmap.

In some optional implementations of this embodiment, the data write-in instruction includes to-be-processed data and first address information. Here, the to-be-processed data refers to to-be-written data in the data write-in instruction, that is, input data (Token) of a communication requesting end. The to-be-processed data may refer to parameters, feature vectors or other data required to be transmitted during a collective communication in a Mixture-of-Experts model. The first address information refers to the address information corresponding to the target address to which the to-be-processed data is written.

In some optional implementations of this embodiment, the data write-in instruction further includes first routing information.

Specifically, the first routing information is used to identify the communication receiving end sending the to-be-processed data. Here, the first routing information is outputted by the gating network in the Mixture-of-Experts model according to the to-be-processed data. The communication requesting end invokes the data write-in instruction and sends the data write-in instruction to a switch, and the switch sends the data write-in instruction to the communication receiving end according to the first routing information in the data write-in instruction. Here, there may be one or more communication receiving ends, of which the number is specifically determined according to the first routing information, which is not limited in the present disclosure.

It should be noted that after the communication instruction is transferred to a C2C engine via a network on chip (NOC), the C2C engine converts the instruction into the form of a data message or data packet, and transmits the data message or data packet in a collective communication network. The communication instruction (the data write-in instruction or the data read instruction) mentioned in all of the following embodiments of the present disclosure refer to the data message corresponding to the communication instruction.

Step 202, accessing a virtual expert address in a pre-created virtual address space according to first address information.

Based on step 201, this step is intended to perform a data write-in operation by the communication receiving end according to the received data write-in instruction.

In an embodiment of the present disclosure, each executing body in a communication set pre-creates a respective virtual address space, and the virtual address space is used to store the data of each expert model in the Mixture-of-Experts model. Here, there is one or more expert models in each executing body in the communication set. The virtual expert address in the virtual address space corresponds to the expert models in the executing body, and the virtual expert address is a certain address in the virtual address space of the executing body. The virtual expert address is an address segment allocated to a specific expert model in the virtual address space.

The executing body receives the data write-in instruction as the communication receiving end. Then, the executing body first accesses the pre-created virtual address space, and locates the virtual expert address in the virtual space according to the first address information carried in the data write-in instruction, so as to write the to-be-processed data in the data write-in instruction into the expert model corresponding to the communication receiving end.

Step 203, applying for a corresponding actual physical space for the virtual expert address based on a size of to-be-processed data.

Based on step 202, this step is intended to allocate the actual physical space to the to-be-processed data by the communication receiving end.

The virtual expert address corresponds to the address to which the first address information points. Only when the data write-in instruction reaches and accesses the virtual address, the actual physical space corresponding to the virtual expert address is applied for. The actual physical space refers to a physical memory space in a computing device for actually storing data. The communication receiving end will dynamically allocate the physical memory according to the size of the to-be-processed data, to ensure that there is enough space to store the to-be-processed data. Here, the size of the actual physical space is consistent with the size of the to-be-processed data to be written. Clearly, the size of the actual physical space may be slightly larger or smaller than the size of the to-be-processed data. The size of the actual physical space may be determined according to actual conditions, which is not limited in the present disclosure.

Step 204, writing the to-be-processed data into the actual physical space.

Based on step 203, this step is intended to write the to-be-processed data into a target address according to the data write-in instruction to complete this communication.

The communication receiving end writes the to-be-processed data into the actual physical space applied for in step 203, to complete the data storage process. By writing data into the actual physical space, the Mixture-of-Experts model can access and use these data during a subsequent calculation.

According to the embodiment of the present disclosure, the virtual address space is pre-created in each executing body instead of applying for an actual physical memory. Only when the executing body, as the communication receiving end, receives the data write-in instruction (i.e., the data message) and accesses the virtual expert address in the virtual address space according to the first address information in the data write-in instruction, an actual physical space is allocated as required in the address pointed to by the first address information according to the size of the to-be-processed data in the data write-in instruction. According to the collective communication method provided in the present disclosure, it is not required to synchronize address information during the communication, thereby saving time overhead and improving processing performance. Moreover, according to the communication method provided in the present disclosure, only when the data message reaches and accesses the virtual expert address, the corresponding actual physical space is applied for according to the size of the to-be-processed data, which can avoid the resource explosion caused by an excessive memory occupation, thereby further improving the processing performance.

In some optional implementations of this embodiment, the virtual address space is created based on the total size of all to-be-processed data in the collective communication.

Specifically, the virtual address space is previously created internally by the executing body. Before performing the collective communication, the communication receiving end pre-estimates the total size of all the to-be-processed data required to be transmitted during the collective communication. Based on this total size, the communication receiving end creates a virtual address space of a corresponding size to ensure that there is enough virtual address space to map all the to-be-processed data.

Since the executing body does not know how many pieces of data the executing body needs to receive in a training or inference process, the virtual address space is created according to the total size of all the to-be-processed data of all the executing bodies in the collective communication, to ensure that the virtual expert address corresponding to the to-be-processed data can be found in the virtual address space according to the first address information during the communication, and thus, the actual physical space can be applied for according to the virtual expert address, and then the data communication can be accurately completed.

For example, if the total size of all the to-be-processed data required to be transmitted during the collective communication is 1GB, the communication receiving end creates a virtual address space of a size which is at least 1GB. In this way, it can be ensured that, for all the to-be-processed data, the corresponding location can be found in the virtual address space.

Here, the total size of all the to-be-processed data in the collective communication can be obtained by calculating the sum of the sizes of all pieces of to-be-processed data. Optionally, the total size of all the to-be-processed data in the collective communication may alternatively be determined according to a pre-stored log file, or may be determined according to a pre-set data set for training or inference, which is not limited in the present disclosure.

In some optional implementations of this embodiment, the size of the virtual address space is determined by the total number of pieces of to-be-processed data in the collective communication and the size of the to-be-processed data.

Specifically, each executing body may process one or more pieces of to-be-processed data, and the sizes of the pieces of to-be-processed data are equal. Accordingly, the total size of all the to-be-processed data in the collective communication may be obtained by calculating the product of the total number of the pieces of to-be-processed data and the size of the to-be-processed data. That is, the total size is the number of all Tokens *hidden Size, where hidden Size is a Token Size, and the Token Size is a fixed value. By determining the size of the virtual address space in this way, it can be ensured that the virtual address space is neither too large to waste resources nor too small to be insufficient.

In some optional implementations of this embodiment, the virtual address space includes a virtual numbered address space and a virtual expert address space. The virtual numbered address space is used to store the number information of each participant (i.e., each executing body, including an executing body corresponding to the communication requesting end and an executing body corresponding to the communication receiving end) in the collective communication. The virtual expert address space is used to store the data of each expert model, and each virtual expert address space corresponds to the data storage region of one expert model. When the executing body, as the communication receiving end, accesses the virtual numbered address space, there will be a virtual expert address space corresponding to a routing access.

Here, the virtual numbered address space may be created by any one of the executing bodies in the collective communication, and then the created virtual numbered address space is broadcast to the other executing bodies. The virtual expert address space is created respectively by the executing bodies. The virtual numbered address space and the virtual expert address space are of the same size, and are both created according to the total size of all the to-be-processed data during the collective communication.

It should be noted that the virtual numbered address space is created for the purpose of interacting with the switch during the collective communication. After the switch receives the data write-in instruction sent by the communication requesting end, the switch first multicasts the data write-in instruction to the virtual numbered address space corresponding to the communication receiving end, which does not mean actually storing the data. Therefore, the virtual numbered address space may not be a virtual address space, but may be only the handle of a virtual address space. Only the virtual expert address space will apply for a real memory, and the virtual expert address space will be bound and mapped to the virtual numbered address space.

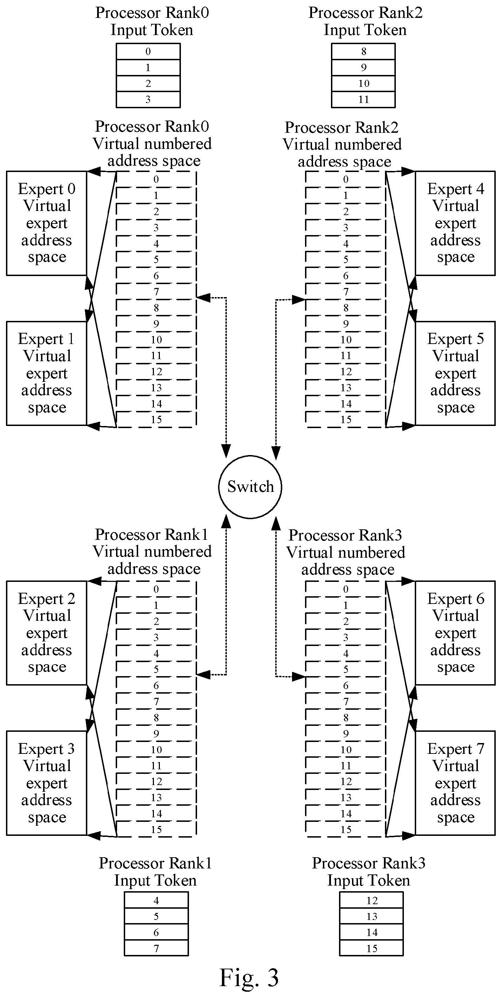

Fig. 3 is a schematic diagram of a virtual numbered address space and a virtual expert address space in a Mixture-of-Experts model based collective communication provided by an embodiment of the present disclosure.

As shown in Fig. 3, it is assumed that an executing body refers to a processor. An example in which 4 processors (a processor Ranko, a processor Rank1, a processor Rank2, and a processor Rank3) communicate with each other is given for illustration. Here, the input of each processor includes 4 input Tokens, and each processor includes two expert models. Therefore, the size of the virtual numbered address space created a processor is equal to the total size of the input Tokens of the four processors, that is, the size of the space occupied by the 16 input Tokens. There is a one-to-two mapping relationship between the virtual numbered address space and the virtual expert address space.

Referring again to Fig. 3, a data write-in instruction is issued. Here, the address pointed to by the first address information in the data write-in instruction is a virtual space address in the virtual numbered address space. An executing body, as a communication requesting end, sends the data write-in instruction (message) to a switch. The switch makes many copies of the data write-in instruction to perform a multicasting operation on the data write-in instruction, sends the data write-in instruction to the virtual numbered address space of a communication receiving end, and accesses the virtual expert address in the virtual expert address space based on the mapping relationship between the virtual numbered address space and a virtual expert address space.

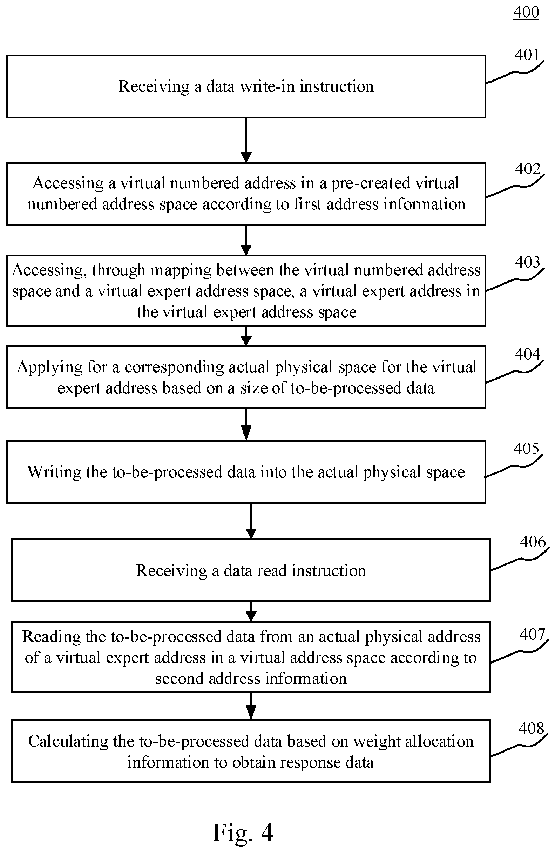

Fig. 4 is a flowchart of another Mixture-of-Experts model based collective communication method provided by an embodiment of the present disclosure. As shown in Fig. 4, the method 400 includes the following steps.

Step 401, receiving a data write-in instruction.

The specific operation of this step is the same as that of the above step 201, and thus will not be repeatedly described here.

Step 402, accessing a virtual numbered address in a pre-created virtual numbered address space according to first address information.

Specifically, a communication receiving end locates the corresponding virtual numbered address in the virtual numbered address space according to the first address information. The virtual numbered address contains information related to a specific number, for example, a number value, and an expert model corresponding to the number.

Step 403, accessing, through mapping between the virtual numbered address space and a virtual expert address space, a virtual expert address in the virtual expert address space.

Specifically, there is a mapping relationship between the virtual numbered address space and the virtual expert address space. Through this mapping relationship, the communication receiving end finds the corresponding virtual expert address in the virtual expert address space from the virtual numbered address.

Here, each executing body may include one expert model, or a plurality of expert models.

When the executing body, as the communication receiving end, includes only one expert model, there is a linear mapping relationship between the virtual numbered address space and the virtual expert address space. At this time, the access to the virtual numbered address space is equivalent to the access to the virtual expert address space. After the virtual numbered address in the virtual numbered address space is accessed according to the first address information, the routing access to the virtual expert address space corresponding to the virtual numbered address space can be directly performed.

When the executing body, as the communication receiving end includes at least two expert models, there is a one-to-many mapping relationship between the virtual numbered address space and the virtual expert address space. At this time, the access to the virtual numbered address space is equivalent to the access to many virtual expert address spaces. It is required to perform a memory access many times inside the executing body, thus implementing the access to many virtual expert address spaces. The data write-in instruction received by the communication receiving end may only be required to be written into some of the expert models of the communication receiving end. Therefore, after the access to the virtual numbered address in the virtual numbered address space according to the first address information, the routing access to the corresponding virtual expert address space can be performed according to the expert model to which the to-be-processed data is written.

According to the embodiment of the present disclosure, the flexible mapping between a number and an expert model can be realized through the design of two-level address space, such that the corresponding expert model data can be quickly located according to the number information during the collective communication.

Step 404, applying for a corresponding actual physical space for the virtual expert address based on a size of to-be-processed data.

The specific operation of this step is the same as that of the above step 203, and thus will not be repeatedly described here.

Step 405, writing the to-be-processed data into the actual physical space.

The specific operation of this step is the same as that of the above step 204, and thus will not be repeatedly described here.

In some optional implementations of this embodiment, the data write-in instruction further includes first routing information. The accessing, through mapping between the virtual numbered address space and a virtual expert address space, a virtual expert address in the virtual expert address space in step 403 specifically includes: accessing, in response to the virtual numbered address space corresponding to at least two virtual expert address spaces, a virtual expert address in the virtual expert address spaces through mapping between the virtual numbered address space and the virtual expert address spaces according to the first routing information.

Specifically, one virtual numbered address may correspond to a plurality of virtual expert address spaces. That is, one executing body may be associate with a plurality of expert models. In this situation, the communication receiving end needs to determine the virtual expert address space to be accessed according to the first routing information.

The first routing information may be in the form of an expert bitmap, or may be in the form of other data structure information, for example, the first routing information may be an indicator or identifier for indicating which one of a plurality of possible virtual expert address spaces to select. The communication receiving end selects one of the plurality of virtual expert address spaces corresponding to the virtual numbered address according to the first routing information, and then accesses the virtual expert address in this virtual expert address space.

In this way, the present disclosure can realize the flexible mapping between one number and a plurality of expert models, thereby enhancing the expansibility and flexibility of the system.

In some optional implementations of this embodiment, the applying for a corresponding actual physical space for the virtual expert address based on a size of to-be-processed data in step 404 includes the following steps: triggering a page fault interrupt in response to the to-be-processed data being written into the virtual expert address; allocating an actual physical space to the virtual expert address based on the page fault interrupt, and writing a mapping relationship between the virtual expert address and the actual physical space into a page table memory; and obtaining the actual physical space corresponding to the virtual expert address based on the page table memory.

Specifically, after the communication receiving end accesses the virtual expert address in the pre-created virtual address space according to the first address information, the communication receiving end attempts to write the to-be-processed data into the virtual expert address. At this time, since the virtual expert address has not been mapped to an actual physical memory, the system triggers the page fault interrupt. The page fault interrupt is an exception handling mechanism in an operating system for handling a situation where the mapping of a virtual address to a physical address is absent.

The system allocates an actual physical memory space to the virtual expert address in response to the page fault interrupt. After completing the allocation, the system writes the mapping relationship between the virtual expert address and the actual physical space into the page table memory. The page table memory is a data structure used by the operating system to store the mapping relationship of the virtual address to the physical address.

The communication receiving end acquires the address of the actual physical space corresponding to the virtual expert address by querying the page table memory. Based on the actual physical address, the communication receiving end can write the to-be-processed data into the actual physical memory.

According to the embodiment of the present disclosure, only when the data write-in instruction reaches the communication receiving end and accesses the virtual expert address of the communication receiving end, a page terminal error is triggered to apply for the actual physical memory corresponding to the virtual expert address, without performing memory information synchronization during the communication, thereby reducing time consumption and improving performance. Further, by allocating the physical memory as required, it is possible to improve the memory use efficiency, and prevent a large amount of physical memory that may not be used from being allocated in advance.

In some optional implementations of this embodiment, the allocating an actual physical space to the virtual expert address in step 404 specifically includes: allocating the actual physical space to the virtual expert address through a memory processing module in a processor.

Specifically, a dedicated memory processing module is integrated inside the processor for processing the mapping of the virtual address to the physical address and the allocation of the physical memory. When needing to allocate the actual physical space to the virtual expert address, the system will invoke this memory processing module to complete the allocation task.

The memory processing module allocates a physical memory block of an appropriate size from an available physical memory pool according to the size of the to-be-processed data, and then establishes the mapping relationship of the virtual expert address to the physical memory block.

By using the dedicated memory processing module in the processor, it is possible to improve the efficiency of memory allocation and mapping, and reduce the intervention of the operating system, thereby improving the overall performance of the system.

In some optional implementations of this embodiment, the memory processing module is a page manager core or a hardware page management engine.

Specifically, the page manager core (PageManager Core) is a software-implemented memory management module, which runs as a part of the kernel of the operating system. The page manager core is responsible for managing the mapping relationship between a virtual memory and a physical memory, processing the page fault interrupt, and allocating and releasing a physical memory page.

The hardware page management engine (HW PageManager Engine) is a hardware-implemented memory management module, which is integrated in the processor or a memory controller. The hardware page management engine can directly process the conversion from the virtual address to the physical address without the intervention of software, thereby improving the efficiency of memory access.

The memory processing module in the embodiment of the present disclosure can adopt the software-implemented page manager core or the hardware-implemented hardware page management engine, and both the page manager core and the hardware page management engine can effectively allocate the actual physical space to the virtual expert address, and establish the mapping relationship of the virtual address to the physical address, which can be flexibly set according to an actual application scenario.

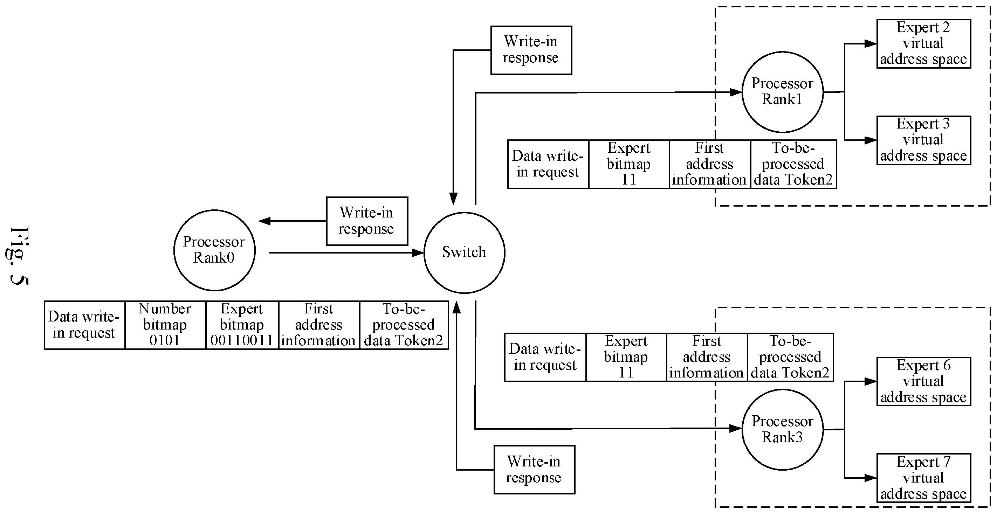

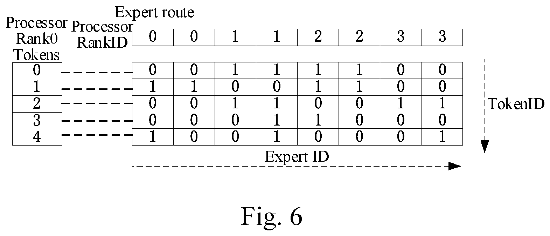

Fig. 5 is a schematic diagram of data multicasting at a Dispatch stage provided by an embodiment of the present disclosure. Fig. 6 is a schematic diagram of first routing information carried in a data write-in instruction related to Fig. 5.

As shown in Figs. 5-6, an example in which 4 processors Rank are included for communication in a collective communication, the input of each processor Rank includes 5 input Tokens and each processor Rank corresponds to 2 expert models is given for illustration.

Each Rank is based on each Input Token and carries the first routing information corresponding to the Token. The first routing information includes a number bitmap and an expert bitmap.

Taking Token2 as an example, the Token2 of Ranko needs to be sent to Rank1 and Rank3 according to the number bitmap. Here, the expert bitmap is used by the Rank GPU of a communication receiving end. Here, when one processor includes only one expert model, the number bitmap and the expert bitmap can be normalized. It should be noted that the number bitmap and the expert bitmap are only an example of the first routing information, and the first routing information may have other representations such as input data and data structure information corresponding to an expert.

As shown in Fig. 5, the Ranko invokes a data write-in instruction (inc_v.store instruction). The Rank0 converts the data write-in instruction into the form of a data message, and the data message includes a data write-in request, and carries the first routing information (including the number bitmap and the expert bitmap) corresponding to the to-be-processed data Token2, first address information and the to-be-processed data Token2. The Rank0 sends the data message to a switch.

After the switch receives the data message sent by the Ranko, the switch may multicast the data message to the corresponding communication receiving ends Rank1 and Rank3 based on the number bitmap, thus completing the multicast transmission of the data message.

For the receiving ends Rank1 and Rank3 of the Rank, the data is written into a plurality of actual physical spaces corresponding to the virtual expert address pointed to by the first address information based on the experts 2 and 3 inside the Rank1 and the experts 6 and 7 inside the Rank1 in the expert bitmap. After completing the data write-in operation, the Rank1 and the Rank3 feed back a write-in response to the switch, and then the switch feeds back the write-in response to the processor Rank0 as a communication requesting end.

In some optional implementations of this embodiment, as shown in Fig. 4, the Mixture-of-Experts model based collective communication method includes not only the above steps 401-405, but also the following steps.

Step 406, receiving a data read instruction, the data read instruction including second address information and weight allocation information.

Specifically, the communication receiving end receives the data read instruction, and the instruction is used to read specific data from stored data and perform a calculation. The data read instruction includes the second address information and the weight allocation information. The second address information is used to indicate a storage location of the data to be read, and the weight allocation information is used to indicate how to performed weighted reading on the data in the plurality of expert models of the communication receiving end.

Step 407, reading the to-be-processed data from an actual physical address of a virtual expert address in a virtual address space according to the second address information.

Specifically, the communication receiving end locates the virtual expert address in the virtual address space according to the second address information, and then finds the corresponding actual physical address through the virtual expert address, to read the to-be-processed data from the actual physical address.

Step 408, calculating the to-be-processed data based on the weight allocation information to obtain response data.

Specifically, the communication receiving end performs a weighted calculation on the to-be-processed data read from the expert model corresponding to the communication receiving end according to the weight allocation information, to obtain the response data. The weight allocation information may be a set of weight values for indicating the importance or contribution of different data in the calculation.

It should be noted that, for the process of calculating the response data based on the weight allocation information, the completion of the calculation needs to rely on hardware. If the hardware does not support the calculation, the process may alternatively be implemented by means of software, and accordingly, it is required to maintain the real physical memory corresponding to the virtual expert address space, to complete the calculation of the response data based on the virtual expert address space in the expert model, and write the response data into the actual physical space pointed to by the virtual expert address.

In this way, the present disclosure can achieve the weighted fusion of the outputs of different expert models in a Mixture-of-Experts model, thereby obtaining a final model output.

In some optional implementations of this embodiment, the data read instruction further includes second routing information, and the virtual address space includes a virtual numbered address space and a virtual expert address space.

The reading the to-be-processed data from an actual physical address of a virtual expert address in a virtual address space according to the second address information in step 407 specifically includes the following steps: determining a virtual numbered address in the virtual numbered address space according to the second address information; determining, through mapping between the virtual numbered address space and the virtual expert address space, the virtual expert address from the virtual expert address space according to the second routing information; and reading the to-be-processed data from the actual physical address of the virtual expert address.

Specifically, the communication receiving end locates the corresponding virtual numbered address in the virtual numbered address space according to the second address information. When one virtual numbered address corresponds to a plurality of virtual expert address spaces, the communication receiving end needs to determine, according to the second routing information, which virtual expert address space the communication receiving end should access. The communication receiving end selects one virtual expert address space from the plurality of virtual expert address spaces corresponding to the virtual numbered address space according to the second routing information, and then determines the virtual expert address in the virtual expert address space.

The communication receiving end finds the corresponding actual physical address through the virtual expert address, and then reads the to-be-processed data from the actual physical address.

In this way, in the present disclosure, it is possible to flexibly read the data of a specific expert model when there are a plurality of virtual expert address spaces, to provide support for the calculation of the Mixture-of-Experts model.

It may be appreciated that the operation corresponding to the data read instruction is the reverse process of the above data write-in instruction, and the specific implementation process of the data read instruction is similar to that of the data write-in instruction, and thus will not be repeatedly described here.

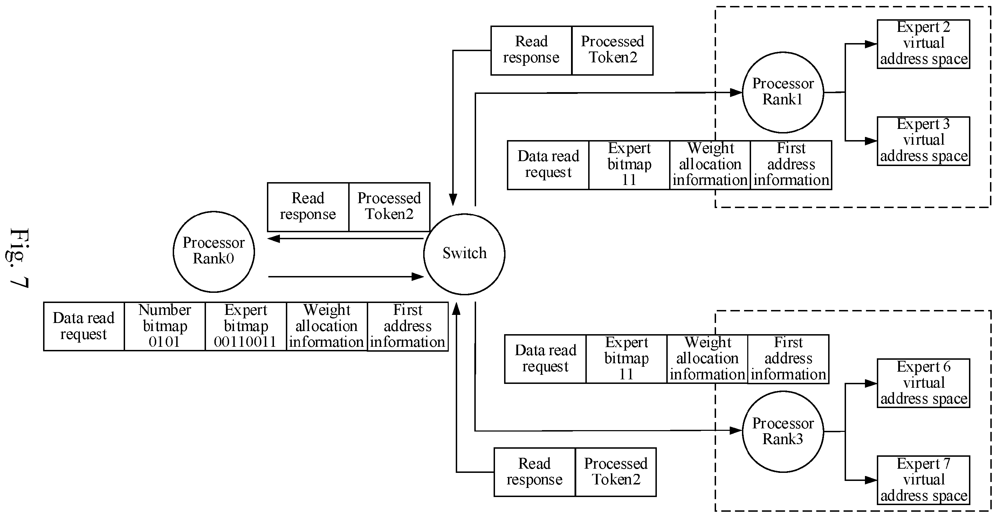

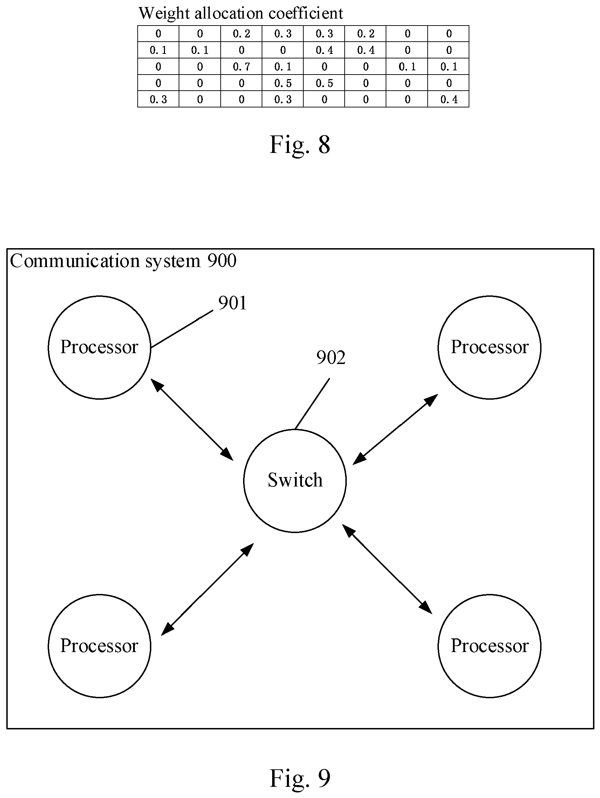

Fig. 7 is a schematic diagram of a data reduction at a Combine stage provided by an embodiment of the present disclosure. Fig. 8 is a schematic diagram of second routing information carried by a data read instruction related to Fig. 7.

As shown in Figs. 7-8, in this embodiment, an example in which 4 processors Rank are included for communication in a collective communication, the input of each processor Rank includes 5 input Tokens and each processor Rank corresponds to 2 expert models is still given for illustration.

Still taking the input Token2 as an example, Rank0 invokes a data read instruction (inc_v.ldr instruction), and AI Core sends the data read instruction to the Rank0. The Rank0 converts the data read instruction into the form of a data message, and the data message includes a data read request, and carries second routing information (including a number bitmap and an expert bitmap) corresponding to the to-be-processed data Token2, second address information, and weight allocation information. The Rank0 sends the data message to a switch.

After the switch receives the data message sent by the Ranko, the switch may multicast the data message to the corresponding communication receiving ends Rank1 and Rank3 based on the number bitmap, thus completing the multicast transmission of the data message.

For the receiving ends Rank1 and Rank3 of the Rank, it is required to complete the reading for a plurality of pieces of expert data at port nodes of the experts 2 and 3 inside the Rank1 and the experts 6 and 7 inside the Rank1 based on the expert bitmap, and perform a calculation based on the weight allocation information to obtain response data.

That is, Token2.rank3.data = Token2.Expert6.weigth * Token2.Expert6_data + Token2.Expert7.weigth * Token2.Expert7_data.

The Rank1 and the Rank3 return the calculated response data to the switch. The switch receives the corresponding data of the Rank1 and the Rank3, and completes the corresponding Reduce calculation task. Finally, the switch returns the Reduce calculation result to the Ranko, and writes the data into the pre-created memory of the Rank0.

According to the embodiment of the present disclosure, a virtual address space is pre-created in each executing body instead of applying for an actual physical memory. Only when an executing body, as a communication receiving end, receives a data write-in instruction (i.e., a data message) and accesses a virtual expert address in the virtual address space according to the address information in the data write-in instruction, an actual physical space is allocated as required in the address pointed to by the address information according to the size of the to-be-processed data in the data write-in instruction. According to the collective communication method provided in the present disclosure, it is not required to synchronize address information during the communication, thereby saving time overhead and improving processing performance. Moreover, according to the communication method provided in the present disclosure, only when the data message reaches and accesses the virtual expert address, the corresponding actual physical space is applied for according to the size of the to-be-processed data, which can avoid the resource explosion caused by excessive memory occupation, thereby further improving the processing performance.

Further referring to Fig. 9, as an implementation of the method shown in the above figures, the present disclosure provides an embodiment of a Mixture-of-Experts model based collective communication system. The embodiment of the communication system corresponds to the embodiment of the method shown in Fig. 2, and the communication system may be applied in various electronic devices.

As shown in Fig. 9, the communication system 900 in this embodiment may include a plurality of processors 901 and a switch 902. Here, the plurality of processors 901 may each initiate a communication request to the other processors 901 as a communication requesting end, and may each receive a communication request sent by the other processors 901 as a communication receiving end.

When a processor 901 receives the sent instruction as the communication requesting end, the processor 901 sends the instruction to the switch 902.

The switch 902 is configured to receive an instruction, the instruction including to-be-processed data, address information and data routing information; and multicast the instruction to a corresponding processor based on the data routing information

When the processor 901 serves as the communication receiving end, the processor 901 is configured to access a virtual expert address in a pre-created virtual address space according to the address information, in response to the received instruction being a data write-in instruction; apply for a corresponding actual physical space for the virtual expert address based on a size of the to-be-processed data; and write the to-be-processed data into the actual physical space.

In this embodiment, for the specific processing of the processor 901 as the communication receiving end in the communication system 900 and the technical effects thereof, reference may be made to the related descriptions of steps 201-204 in the embodiment corresponding to Fig. 2, and thus the details will not be repeatedly described here.

According to the communication system provided in the embodiment of the present disclosure, the data multicasting operation is transferred from the processor to the switch for processing, such that the switch multicasts the instruction according to the data routing information carried in the instruction, which reduces the overhead of the processor in multicasting the data, thereby further improving the calculation efficiency of the communication system. The scheme of the present disclosure is highly expansible, and thus can meet the acceleration requirements of many collective communication operations, and at the same time, can be applicable to a plurality of implementations such as intra-host interconnection and inter-host networking interconnection.

In some optional implementations of this embodiment, the virtual address space includes a virtual numbered address space and a virtual expert address space. The processor 901 is specifically configured to: access a virtual numbered address in a pre-created virtual numbered address space based on the address information, in response to the received instruction being the data write-in instruction; and access, through mapping between the virtual numbered address space and the virtual expert address space, a virtual expert address in the virtual expert address space.

In some optional implementations of this embodiment, the routing information includes an expert bitmap and a number bitmap. The switch 902 is specifically configured to multicast the instruction to the corresponding processor based on the number bitmap. The processor 901 is specifically configured to: access the virtual numbered address in the pre-created virtual numbered address space based on the address information, in response to the received instruction being the data write-in instruction and in response to the virtual numbered address space corresponding to at least two virtual expert address spaces; and accessing a virtual expert address in the virtual expert address spaces through mapping between the virtual numbered address space and the virtual expert address spaces according to the expert bitmap.

In this embodiment, for the specific processing of the processor 901 as the communication receiving end in the communication system 900 and the technical effects thereof, reference may be respectively made to the related descriptions of steps 402-403 in the above method embodiment, and thus the details will not be repeatedly described here.

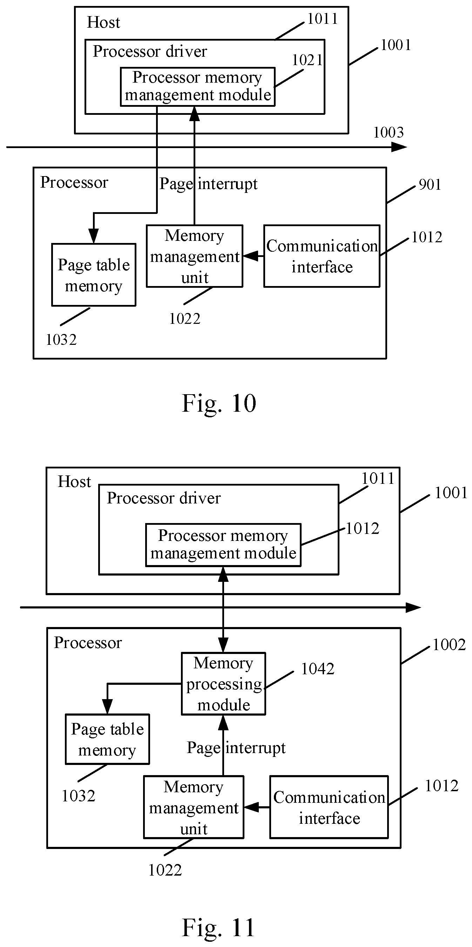

Fig. 10 is a structural diagram of a physical memory allocation apparatus provided by an embodiment of the present disclosure.

As shown in Fig. 10, after a processor 901, as a communication receiving end, accesses a virtual expert address in a pre-created virtual address space according to first address information, the processor 901 attempts to write to-be-processed data into the virtual expert address. A communication interface 1012 in the processor 901 is routed to a memory management unit 1022 in the processor 901 through an address access bus 1003 of the virtual address space. The memory management unit 1022 in the processor 901 triggers a page fault (PageFault) interrupt to a processor driver 1011 of a host 1001. The processor driver 1011 of the host 1001 allocates a physical memory to the virtual expert address and writes a page table into a page table memory 1032 of the processor. Finally, the communication interface 1012 can access the actual physical space corresponding to the virtual expert address.

Fig. 11 is a structural diagram of another physical memory allocation apparatus provided by an embodiment of the present disclosure.

In some optional implementations of this embodiment, as shown in Fig. 11, a processor 901 includes a communication interface 1012, a memory management unit 1022, and a memory processing module 1042. The communication interface 1012 is configured to access the memory management unit 1022 based on an access bus of a virtual expert address. The memory management unit 1022 is configured to trigger a page fault interrupt in response to to-be-processed data being written into the virtual expert address, and send the interrupt to the memory processing module 1042. The memory processing module 1042 is configured to allocate an actual physical space to the virtual expert address, write a mapping relationship between the virtual expert address and the actual physical space into a page table memory, and obtain the actual physical space corresponding to the virtual expert address based on the page table memory.

Specifically, as shown in Fig. 11, after processor 1002, as a communication receiving end, accesses a virtual expert address in a pre-created virtual address space according to first address information, the processor 1002 attempts to write to-be-processed data into the virtual expert address. A communication interface 1012 in the processor 1002 is routed to a memory management unit 1022 in the processor 1002 through an address access bus 1003 of the virtual address space. The memory management unit 1022 in the processor 1002 triggers a page fault (PageFault) interrupt to a memory processing module 1042 in the processor 1002. The memory processing module 1042 in the processor 1002 allocates a physical memory to the virtual expert address and writes a page table into a page table memory 1032 of the processor. Finally, the communication interface 1012 can access the actual physical space corresponding to the virtual expert address. By using the dedicated memory processing module in the processor, it is possible to improve the efficiency of memory allocation and mapping, and reduce the intervention of an operating system, thereby improving the overall performance of the system.

In some optional implementations of this embodiment, the memory processing module is a page manager core or a hardware page management engine.

Specifically, the page manager core (PageManager Core) is a software-implemented memory management module, which runs as a part of the kernel of the operating system. The page manager core is responsible for managing the mapping relationship between a virtual memory and a physical memory, processing the page fault interrupt, and allocating and releasing a physical memory page.

The hardware page management engine (HW PageManager Engine) is a hardware-implemented memory management module, which is integrated in the processor or a memory controller. The hardware page management engine can directly process the conversion from the virtual address to the physical address without the intervention of software, thereby improving the efficiency of memory access.

The memory processing module 1042 in the embodiment of the present disclosure can adopt the software-implemented page manager core or the hardware-implemented hardware page management engine, and both the page manager core and the hardware page management engine can effectively allocate the actual physical space to the virtual expert address, and establish the mapping relationship of the virtual address to the physical address, which can be flexibly set according to an actual application scenario.

In some optional implementations of this embodiment, the processor 901 is further configured to: read the to-be-processed data from an actual physical address of the virtual expert address in the virtual address space according to the address information, in response to the instruction being a data read instruction, wherein the data read instruction further includes weight allocation information; and calculate the to-be-processed data based on the weight allocation information to obtain response data. The switch 902 is further configured to: perform a Reduce calculation on the response data, and feed back a Reduce calculation result to an instruction sending end.

In this embodiment, for the specific processing of the processor 901 receiving the data read instruction in the communication system 900 and the technical effects thereof, reference may be made to the related descriptions of steps 406-408 in the above method embodiment, and thus the details will not be repeatedly described here.

It should be noted that other details in the collective communication system provided in the embodiment of the present disclosure are the same as those in any of the above embodiments of the collective communication method, and thus will not be repeatedly described here.

This embodiment exists as a communication system embodiment corresponding to the above method embodiment. According to the communication system provided in this embodiment, the virtual address space is pre-created in each processor instead of applying for the actual physical memory. Only when the processor, as the communication receiving end, receives the data write-in instruction (i.e., the data message) and accesses the virtual expert address in the virtual address space according to the address information in the data write-in instruction, an actual physical space is allocated as required in the address pointed to by the address information according to the size of the to-be-processed data in the data write-in instruction. According to the collective communication system provided in the present disclosure, it is not required to synchronize address information during the communication, thereby saving time overhead and improving processing performance. Moreover, according to the communication system provided in the present disclosure, only when the data message reaches and accesses the virtual expert address, the corresponding actual physical space is applied for according to the size of the to-be-processed data, which can avoid the resource explosion caused by excessive memory occupation, thereby further improving the processing performance. Further, according to the communication system provided in the embodiment of the present disclosure, the data multicasting operation is transferred from the processor to the switch for processing, such that the switch multicasts the instruction according to the data routing information carried in the instruction, which reduces the overhead of the processor in multicasting the data, thereby further improving the calculation efficiency of the communication system. The scheme of the present disclosure is highly expansible, and thus can meet the acceleration requirements of many collective communication operations, and at the same time, can be applicable to a plurality of implementations such as intra-host interconnection and inter-host networking interconnection.

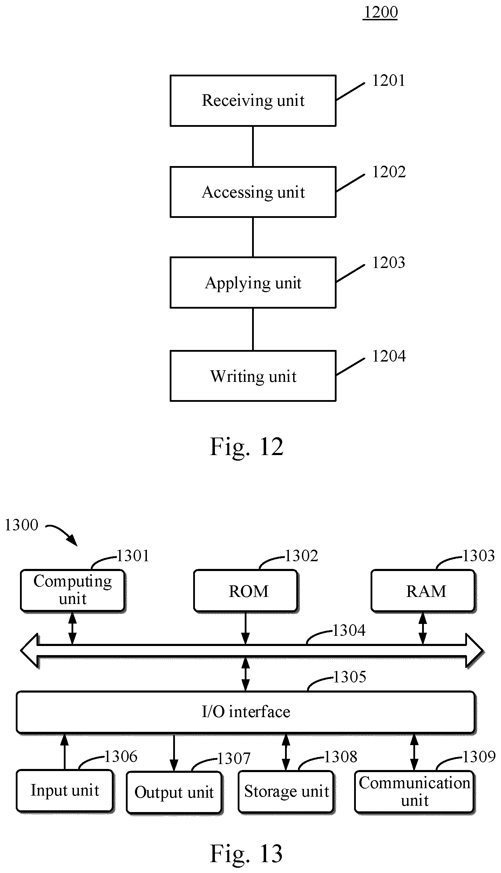

Fig. 12 illustrates a Mixture-of-Experts model based collective communication apparatus 1200 provided by the present disclosure. Further referring to Fig. 12, as an implementation of the method shown in the above figures, the present disclosure provides an embodiment of a Mixture-of-Experts model based collective communication apparatus. The embodiment of the apparatus corresponds to the embodiment of the method shown in Fig. 2, and the apparatus may be applied in various electronic devices.

As shown in Fig. 12, the Mixture-of-Experts model based collective communication apparatus in this embodiment may include a receiving unit 1201, an accessing unit 1202, an applying unit 1203 and a writing unit 1204. Here, the receiving unit 1201 is configured to receive a data write-in instruction. Here, the data write-in instruction includes to-be-processed data and first address information. The accessing unit 1202 is configured to access a virtual expert address in a pre-created virtual address space according to the first address information. The applying unit 1203 is configured to apply for a corresponding actual physical space for the virtual expert address based on a size of the to-be-processed data. The writing unit 1204 is configured to write the to-be-processed data into the actual physical space.

In this embodiment, for the specific processing of the receiving unit 1201, the accessing unit 1202, the applying unit 1203 and the writing unit 1204 in the Mixture-of-Experts model based collective communication apparatus 1200 and the technical effects thereof, reference may be respectively made to the related descriptions of steps 201-204 in the embodiment corresponding to Fig. 2, and thus the details will not be repeatedly described here.

In some optional implementations of this embodiment, the virtual address space is created based on a total size of all to-be-processed data in a collective communication.

In some optional implementations of this embodiment, the size of the virtual address space is determined by the total number of pieces of to-be-processed data in the collective communication in the collective communication and the size of the to-be-processed data.

In some optional implementations of this embodiment, the virtual address space includes a virtual numbered address space and a virtual expert address space. The accessing unit 1202 is further configured to: access a virtual numbered address in a pre-created virtual numbered address space according to the first address information; and access, through mapping between the virtual numbered address space and the virtual expert address space, a virtual expert address in the virtual expert address space.

In some optional implementations of this embodiment, the data write-in instruction further includes first routing information. The accessing unit 1202 is further configured to: access, in response to the virtual numbered address space corresponding to at least two virtual expert address spaces, a virtual expert address in the virtual expert address spaces through mapping between the virtual numbered address space and the virtual expert address spaces according to the first routing information.

In some optional implementations of this embodiment, the applying unit 1203 is further configured to: trigger a page fault interrupt in response to the to-be-processed data being written into the virtual expert address; allocate an actual physical space to the virtual expert address based on the page fault interrupt, and write a mapping relationship between the virtual expert address and the actual physical space into a page table memory; and obtain the actual physical space corresponding to the virtual expert address based on the page table memory.

In some optional implementations of this embodiment, the applying unit 1203 is further configured to: allocate the actual physical space to the virtual expert address through a memory processing module in a processor.

In some optional implementations of this embodiment, the memory processing module is a page manager core or a hardware page management engine.

In some optional implementations of this embodiment, the receiving unit 1201 is further configured to: receive a data read instruction, the data read instruction including second address information and weight allocation information. The apparatus 1200 further includes a data reading unit and a calculating unit. Here, the data reading unit is configured to: read the to-be-processed data from an actual physical address of the virtual expert address in the virtual address space according to the second address information. The calculating unit is configured to: calculate the to-be-processed data based on the weight allocation information to obtain response data.

In some optional implementations of this embodiment, the data read instruction further includes second routing information, and the virtual address space includes a virtual numbered address space and a virtual expert address space. The data reading unit is further configured to: determine a virtual numbered address in the virtual numbered address space according to the second address information; determine, through mapping between the virtual numbered address space and the virtual expert address space, the virtual expert address from the virtual expert address space according to the second routing information; and read the to-be-processed data from the actual physical address of the virtual expert address.

This embodiment exists as an apparatus embodiment corresponding to the above method embodiment. According to the Mixture-of-Experts model based collective communication apparatus provided in this embodiment, the virtual address space is pre-created instead of applying for the actual physical memory. Only when the apparatus receives the data write-in instruction (i.e., the data message) and accesses the virtual expert address in the virtual address space according to the first address information in the data write-in instruction, an actual physical space is allocated as required in the address pointed to by the first address information according to the size of the to-be-processed data in the data write-in instruction. According to the collective communication apparatus provided in the present disclosure, it is not required to synchronize address information during the communication, thereby saving time overhead and improving processing performance. Moreover, according to the communication apparatus provided in the present disclosure, only when the data message reaches and accesses the virtual expert address, the corresponding actual physical space is applied for according to the size of the to-be-processed data, which can avoid the resource explosion caused by excessive memory occupation, thereby further improving the processing performance.

According to an embodiment of the present disclosure, the present disclosure further provides an electronic device. The electronic device includes at least one processor, and a memory in communication with the at least one processor. Here, the memory stores instructions executable by the at least one processor, and the instructions are executed by the at least one processor, to enable the at least one processor to implement the Mixture-of-Experts model based collective communication method described in any of the above embodiments.

According to an embodiment of the present disclosure, the present disclosure further provides a readable storage medium. The readable storage medium stores a computer instruction. The computer instruction is used to enable a computer to implement the Mixture-of-Experts model based collective communication method described in any of the above embodiments.

According to an embodiment of the present disclosure, the present disclosure further provides a computer program product. The computer program, when executed by a processor, can implement the Mixture-of-Experts model based collective communication method described in any of the above embodiments.

Fig. 13 shows a schematic block diagram of an example electronic device 1300 that may be used to implement embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 13, the electronic device 1300 includes a computing unit 1301, which may execute various appropriate actions and processes in accordance with a computer program stored in a read-only memory (ROM) 1302 or a computer program loaded into a random access memory (RAM) 1303 from a storage unit 1308. The RAM 1303 also stores various programs and data required by operations of the device 1300. The computing unit 1301, the ROM 1302 and the RAM 1303 are connected to each other through a bus 1304. An input/output (I/O) interface 1305 is also connected to the bus 1304.

A plurality of components in the electronic device 1300 are connected to the I/O interface 1305, which include: an input unit 1306, for example, a keyboard and a mouse; an output unit 1307, for example, various types of displays and a speaker; a storage unit 1308, for example, a magnetic disk and an optical disk; and a communication unit 1309, for example, a network card, a modem, a wireless communication transceiver. The communication unit 1309 allows the device 1300 to exchange information/data with an other device through a computer network such as the Internet and/or various telecommunication networks.

The computing unit 1301 may be various general-purpose and/or special-purpose processing assemblies having processing and computing capabilities. Some examples of the computing unit 1301 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computing unit 1301 performs the various methods and processes described above, for example, the Mixture-of-Experts model based collective communication method. For example, in some embodiments, the Mixture-of-Experts model based collective communication method may be implemented as a computer software program, which is tangibly included in a machine readable medium, for example, the storage unit 1308. In some embodiments, part or all of the computer program may be loaded into and/or installed on the device 1300 via the ROM 1302 and/or the communication unit 1309. When the computer program is loaded into the RAM 1303 and executed by the computing unit 1301, one or more steps of the above Mixture-of-Experts model based collective communication method may be performed. Alternatively, in other embodiments, the computing unit 1301 may be configured to perform the Mixture-of-Experts model based collective communication method through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

According to the technical solution of the embodiments of the present disclosure, a virtual address space is pre-created in each processor instead of applying for an actual physical memory. Only when a processor, as a communication receiving end, receives a data write-in instruction (i.e., a data message) and accesses a virtual expert address in the virtual address space according to the address information in the data write-in instruction, an actual physical space is allocated as required in the address pointed to by the address information according to the size of the to-be-processed data in the data write-in instruction. According to the collective communication scheme provided in the present disclosure, it is not required to synchronize address information during the communication, thereby saving time overhead and improving processing performance. Moreover, according to the communication system provided in the present disclosure, only when the data message reaches and accesses the virtual expert address, the corresponding actual physical space is applied for according to the size of the to-be-processed data, which can avoid the resource explosion caused by excessive memory occupation, thereby further improving the processing performance. Further, according to the scheme provided in the embodiments of the present disclosure, a data multicasting operation is transferred from the processor to a switch for processing, such that the switch multicasts the instruction according to the data routing information carried in the instruction, which reduces the overhead of the processor in multicasting the data, thereby further improving the calculation efficiency of the communication system. The scheme of the present disclosure is highly expansible, and thus can meet the acceleration requirements of many collective communication operations, and at the same time, can be applicable to a plurality of implementations such as intra-host interconnection and inter-host networking interconnection.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A Mixture-of-Experts model based collective communication method, applied to a communication receiving end, the method comprising:
receiving (201) a data write-in instruction, wherein the data write-in instruction comprises to-be-processed data and first address information;
accessing (202) a virtual expert address in a pre-created virtual address space according to the first address information;
applying for (203) a corresponding actual physical space for the virtual expert address based on a size of the to-be-processed data; and
writing (204) the to-be-processed data into the actual physical space.

2. The method according to claim 1, wherein the virtual address space comprises a virtual numbered address space and a virtual expert address space; and accessing (202) the virtual expert address in the pre-created virtual address space according to the first address information comprises:
accessing a virtual numbered address in a pre-created virtual numbered address space according to the first address information; and
accessing, through mapping between the virtual numbered address space and the virtual expert address space, the virtual expert address in the virtual expert address space.

3. The method according to claim 2, wherein the data write-in instruction further comprises first routing information, and accessing, through mapping between the virtual numbered address space and the virtual expert address space, the virtual expert address in the virtual expert address space comprises:
accessing, in response to the virtual numbered address space corresponding to at least two virtual expert address spaces, the virtual expert address in the virtual expert address spaces through mapping between the virtual numbered address space and the virtual expert address spaces according to the first routing information.

4. The method according to any one of claims 1-3, wherein applying for (203) the corresponding actual physical space for the virtual expert address based on the size of the to-be-processed data comprises:
triggering a page fault interrupt in response to the to-be-processed data being written into the virtual expert address;
allocating an actual physical space to the virtual expert address based on the page fault interrupt, and writing a mapping relationship between the virtual expert address and the actual physical space into a page table memory; and
obtaining the actual physical space corresponding to the virtual expert address based on the page table memory.

5. The method according to claim 4, wherein allocating the actual physical space to the virtual expert address comprises:
allocating the actual physical space to the virtual expert address through a memory processing module in a processor,
wherein the memory processing module is a page manager core or a hardware page management engine.

6. The method according to any one of claims 1-5, further comprising:
receiving a data read instruction, the data read instruction comprising second address information and weight allocation information;
reading the to-be-processed data from an actual physical address of the virtual expert address in the virtual address space according to the second address information; and
calculating the to-be-processed data based on the weight allocation information to obtain response data.

7. The method according to claim 6, wherein the data read instruction further comprises second routing information, the virtual address space comprises a virtual numbered address space and a virtual expert address space, and reading the to-be-processed data from the actual physical address of the virtual expert address in the virtual address space according to the second address information comprises: determining a virtual numbered address in the virtual numbered address space according to the second address information;
determining, through mapping between the virtual numbered address space and the virtual expert address space, the virtual expert address from the virtual expert address space according to the second routing information; and
reading the to-be-processed data from the actual physical address of the virtual expert address.

8. The method according to any one of claims 1-7, wherein the virtual address space is created based on a total size of all to-be-processed data in a collective communication.

9. A Mixture-of-Experts model based collective communication system, comprising a plurality of processors (901) and a switch (902), wherein:
the switch (902) is configured to: receive an instruction, the instruction comprising to-be-processed data, address information and data routing information; and multicast the instruction to a corresponding processor based on the data routing information; and
the processor (901) is configured to: access a virtual expert address in a pre-created virtual address space according to the address information, in response to the received instruction being a data write-in instruction; apply for a corresponding actual physical space for the virtual expert address based on a size of the to-be-processed data; and write the to-be-processed data into the actual physical space.

10. The communication system according to claim 9, wherein the virtual address space comprises a virtual numbered address space and a virtual expert address space, and the processor (901) is specifically configured to: access a virtual numbered address in a pre-created virtual numbered address space based on the address information, in response to the received instruction being the data write-in instruction; and access, through mapping between the virtual numbered address space and the virtual expert address space, the virtual expert address in the virtual expert address space.

11. The communication system according to claim 10, wherein the routing information comprises an expert bitmap and a number bitmap,
the switch (902) is specifically configured to: multicast the instruction to the corresponding processor based on the number bitmap, and
the processor (901) is specifically configured to: access the virtual numbered address in the pre-created virtual numbered address space based on the address information, in response to the received instruction being the data write-in instruction and in response to the virtual numbered address space corresponding to at least two virtual expert address spaces; and accessing the virtual expert address in the virtual expert address spaces through mapping between the virtual numbered address space and the virtual expert address spaces according to the expert bitmap.

12. The communication system according to any one of claims 9-11, wherein the processor comprises a communication interface, a memory management unit and a memory processing module,
the communication interface is configured to: access the memory management unit based on an access bus of the virtual expert address,
the memory management unit is configured to: trigger a page fault interrupt in response to the to-be-processed data being written into the virtual expert address, and send the interrupt to the memory processing module, and
the memory processing module is configured to: allocate an actual physical space to the virtual expert address, write a mapping relationship between the virtual expert address and the actual physical space into a page table memory, and obtain the actual physical space corresponding to the virtual expert address based on the page table memory.

13. The communication system according to any one of claims 9-12, wherein the processor (901) is further configured to: read the to-be-processed data from an actual physical address of the virtual expert address in the virtual address space according to the address information, in response to the instruction being a data read instruction, wherein the data read instruction further comprises weight allocation information; and calculate the to-be-processed data based on the weight allocation information to obtain response data, and
the switch (902) is further configured to: perform a Reduce calculation on the response data, and feed back a Reduce calculation result to an instruction sending end.

14. An electronic device, comprising:
at least one processor; and
a memory, in communication with the at least one processor,
wherein the memory stores instructions executable by the at least one processor, and the instructions are executed by the at least one processor, to enable the at least one processor to perform the collective communication method according to any one of claims 1-8.

15. A non-transitory computer readable storage medium, storing a computer instruction, wherein the computer instruction is used to cause a computer to perform the collective communication method according to any one of claims 1-8.
